# EUROPEAN PATENT APPLICATION

(11) **EP 4 270 868 A1**
(43) Date of publication of application: **01.11.2023**
(21) Application number: 22182037.6
(22) Date of filing: 29.06.2022
(51) Int. Cl.: H04L 9/40, H04L 67/568, G06F 21/62, H04W 12/08

(54) **CLIENT CACHE COMPLETE CONTROL PROTOCOL FOR CLOUD SECURITY**

(30) Priority: 25.04.2022 US 202217660619
(71) Applicant: Intuit Inc., Mountain View, CA 94043 (US)
(72) Inventor: MAHESHWARI, Sachin Kumar, Mountain View, 94043 (US); CHAUHAN, Ravi Kumar, Mountain View, 94043 (US); SUJATHA, Rashmi Gururaja, Mountain View, 94043 (US); AGARWAL, Sourabh, Mountain View, 94043 (US); DUTT, Bala, Mountain View, 94043 (US)
(74) Representative: D Young & Co LLP

(57) **Abstract**

A processor may receive a request for access to a first resource from a client. The processor may retrieve a decision token indicating a plurality of resource decisions for the client, each of the plurality of resource decisions including a decision permitting or forbidding access to at least one resource. The processor may identify, among the plurality of resource decisions, a first decision for the first resource. On the basis of the first decision for the first resource, the processor may enable or block access to the first resource by the client. The decision token may have been generated by the processor generating a plurality of resource decisions for the client, the plurality of resource decisions including a first decision permitting or forbidding access to the first resource and at least one additional decision permitting or forbidding access to at least one additional resource.

## Description

### BACKGROUND

Many cloud-based or otherwise network-accessible services are required to provide secure access to customer (and/or other user) resources highly effectively, precisely, consistently, and on a very large scale (e.g., millions of decisions per day). This requirement presents several problems, such as how to make decisions for customer authorization quickly, ideally before the customer even needs the decision. To provide speed and efficiency, the decision should be approximately instantaneous from a customer perspective. However, predetermination of decisions requires storage of those decisions, thereby requiring efficient, accurate, and secure storage as well as the ability to invalidate any predetermined decisions for a customer when access is revoked or newly granted. These and other problems have prevented decision predetermination for cloud-based services in the past.

### BRIEF DESCRIPTIONS OF THE DRAWINGS

FIG. 1 shows an example cloud environment according to some embodiments of the disclosure.
FIG. 2 shows an example authorization process for a first instance according to some embodiments of the disclosure.
FIG. 3 shows an example cache arrangement according to some embodiments of the disclosure.
FIG. 4 shows an example sequence occurring when a token is not available in cache according to some embodiments of the disclosure.
FIG. 5 shows an example authorization process for a subsequent instance according to some embodiments of the disclosure.
FIG. 6 shows an example sequence occurring when a token is available in cache according to some embodiments of the disclosure.
FIGS. 7A-7C show example token invalidation processes according to some embodiments of the disclosure.
FIG. 8 shows an example cache key generation process according to some embodiments of the disclosure.
FIG. 9 shows an example sequence occurring when an expired token is available in cache according to some embodiments of the disclosure.
FIG. 10 shows a computing device according to some embodiments of the disclosure.

### DETAILED DESCRIPTION OF SEVERAL EMBODIMENTS

Embodiments described herein may enable almost instant decision times for cloud and/or other network services from a customer perspective. This can be achieved through processing providing "decision reuse." For example, embodiments described herein can generate a decision token for each decision that is made. Clients can reuse this token instead of making a remote HTTP call to an authorization service.

On login of a customer to a service, multiple resource decisions that may be applicable to the customer can be evaluated for allowability. For example, based on characteristics of the service, the customer, or other factors, disclosed systems and methods can determine the customer is likely to ask for access to a set of resources and make decisions regarding whether the customer can access each resource in the set. The decisions can be cached securely. When the customer attempts to use a resource, if the decision is in the cache, access can be granted based simply on the presence of the decision. Embodiments described herein may be configured to discard or otherwise invalidate cached decisions over time and/or in response to events.

The ability to reuse a pre-evaluated decision without making a remote Authorization Decision Service (ADS) call is decision reuse. Decisions can have time-to-live (TTL). On expiration of this TTL, the ADS can mark decision as expired, and then a remote ADS call can be made to get a fresh decision and save this new decision for future usage.

Disclosed embodiments provide numerous technical advantages, such as the ability to pre-fetch decision tokens for a customer before a request is made, the use of keys for caching of decision tokens that are very efficient and accurate while remaining secure, and the ability to invalidate old tokens cached for users on demand (e.g., when some access is revoked or granted). For example, in environments with thousands of repeated calls for a single user, storing the decisions in the cache drastically reduces calls made (e.g., reducing traffic from ~100TPS to ~10TPM using the decision reuse feature).

For example, there is a cost to generate a decision. To decide the response, an authorization server might have to call multiple downstream services. All these service calls will add to the waiting time of response. Disclosed embodiments minimize client (caller) wait time for an authorization decision. There can be many scenarios during the lifetime of a user's session when the client would check with the authorization server about the user's access criteria for the same request (e.g., user doing a page refresh, going back and forward in the same flow, etc.). All such use cases will benefit by reusing a decision. Decision reuse can reduce the load on downstream services, as systems can avoid making the same downstream call multiple times for the same decision evaluation. Decision reuse can also reduce the load on authorization servers. By not calculating the same decision again and again, the authorization server's load will reduce, promoting efficient usage of authorization resources.

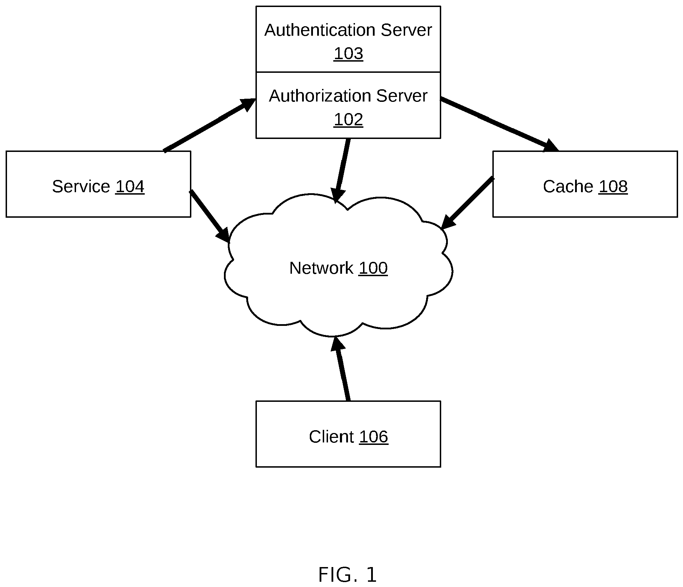

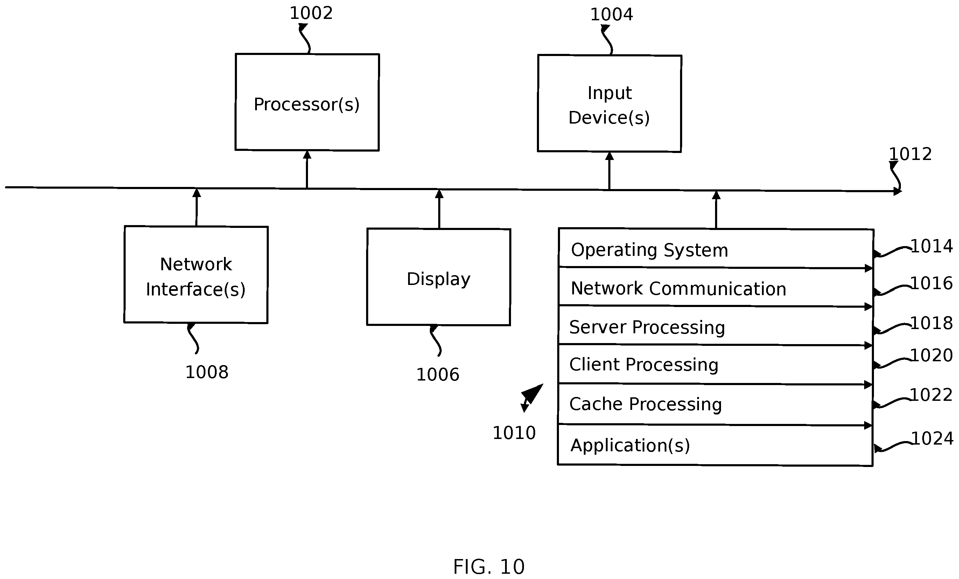

FIG. 1 shows an example cloud environment according to some embodiments of the disclosure. The cloud environment may include a variety of hardware, firmware, and/or software components that interact with one another. Some components may form a network 100 (e.g., the Internet, an intranet, and/or one or more networks that provide a cloud environment). Some components may communicate with one another using network 100. For example, one or more authorization servers 102, authentication servers 103, services 104, clients 106, and/or caching devices 108 may communicate with one another using network 100. Each component may be implemented by one or more computers (e.g., as described below with respect to FIG. 10).

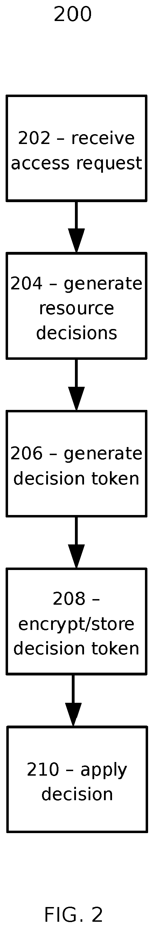

As described in detail below, client 106 can log into service 104 through network 100, for example by using authentication server 103. The login request can be handled by authentication server 103. For an initial request, authorization server 102 can make a set of decisions about not only the specifically-requested service, but other related, or even unrelated, services and/or requests that client 106 may make in the future. Decisions by authorization server 102 can be stored in memory of caching device 108. For subsequent requests by client 106, data in memory of caching device 108 can be checked and, if a decision for the request is available, the request can be immediately authorized or denied as appropriate. For example, FIGS. 2-9 illustrate the functioning of the illustrated components in detail.

Elements illustrated in FIG. 1 (e.g., network 100, authorization server 102, authentication server 103, service 104, client 106, and caching device 108) are each depicted as single blocks for ease of illustration, but those of ordinary skill in the art will appreciate that these may be embodied in different forms for different implementations. For example, while authorization server 102, authentication server 103, service 104, client 106, and caching device 108 are depicted separately, any combination of these elements may be part of a combined hardware, firmware, and/or software element (although in many embodiments client 106 may be separate from the other elements to prevent client tampering with stored decision data in caching device 108, for example). In another example, while authorization server 102 and authentication server 103 are co-located in FIG. 1, they may be separate entities communicating with one another through network 100. Indeed, it will be apparent to those of ordinary skill in the art that many services 104 may be available, given that authorization server 102 makes multiple decisions (e.g., decisions for multiple services 104). In practice, there may be single instances or multiples of any of the illustrated elements, and/or these elements may be combined or co-located.

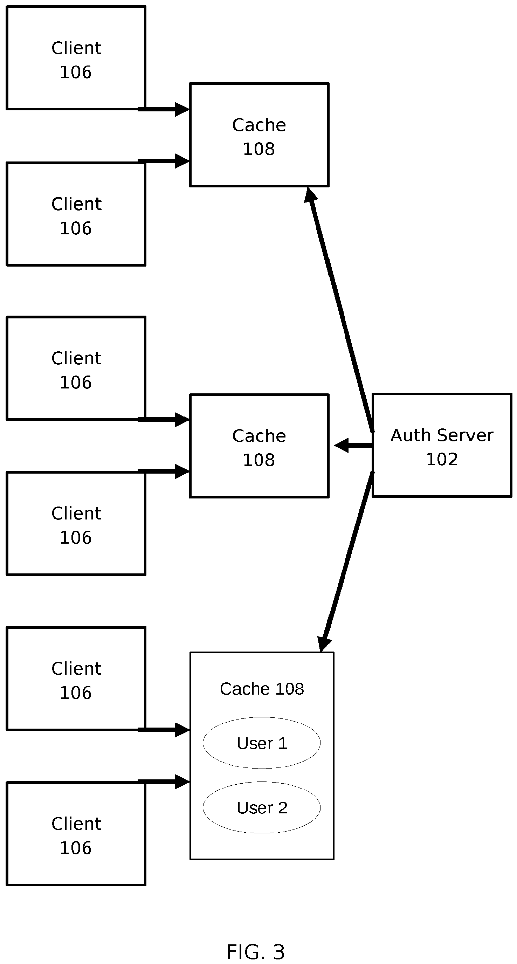

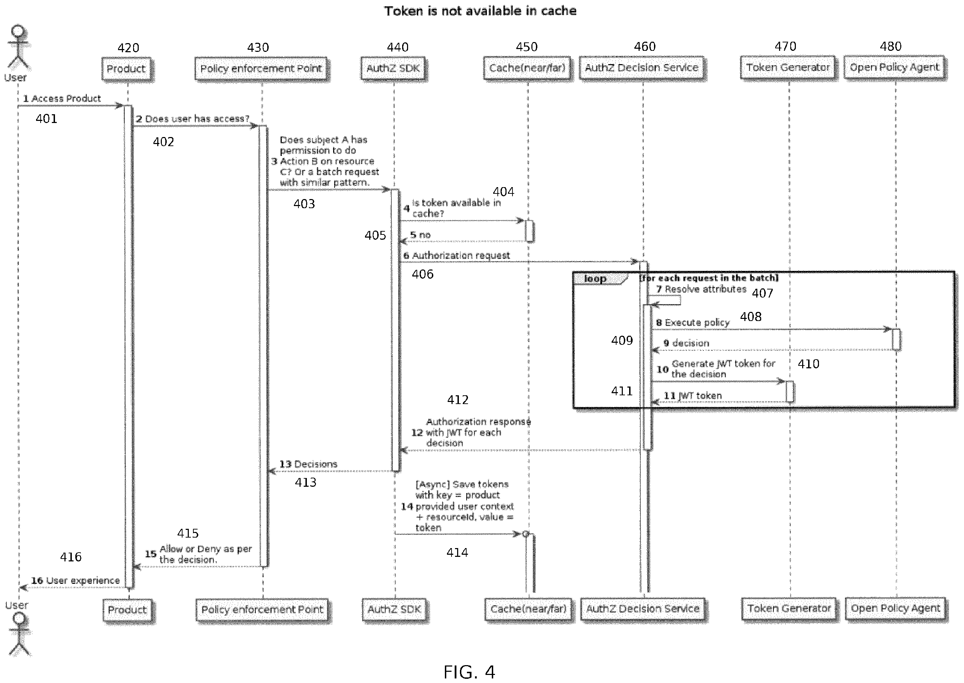

FIG. 2 shows an example authorization process 200 for a first instance according to some embodiments of the disclosure. On the first login to a cloud service of a customer using client 106, there may be no predetermined decision data available. Likewise, after expiration and/or revocation of decision data (e.g., as discussed in detail below), there may be no predetermined decision data available. Process 200 is an example of how the decision data can be generated in these and/or other situations. Further details about process 200 are also shown in and described with reference to FIGS. 3 and 4 below.

At 202, authorization server 102 can receive an access request from client 106. The access request may be a general login request or login action. Alternatively or additionally, the access request may be for a particular resource or set of resources available in the cloud environment. The resource(s) may require authorization by authorization server 102 to be accessed. Accordingly, the access request can include information about client 106 that can be evaluated to determine whether the request should be granted (e.g., user ID, credential(s), details about client 106 subscription, location, IP address, etc.).

At 204, authorization server 102 can generate a plurality of resource decisions for client 106. The plurality of resource decisions can include a first decision permitting or forbidding access to the first resource requested at 202 and at least one additional decision permitting or forbidding access to at least one additional resource. For example, authorization server 102 may include an ADS component. A batch request may go to ADS with a resource selector tag. Using this resource selector tag, ADS can evaluate several decisions that the client might need for several use cases. In some embodiments, the information about client 106 can be used to identify which decisions might be most relevant for client 106. For each of the resources, authorization server 102 can process the client information against an access policy to determine whether client 106 is eligible for access.

At 206, authorization server 102 can generate a decision token for client 106. The decision token can indicate the plurality of resource decisions. For example, decision tokens can include a set of resource and action pairs (e.g., resource1, action1; resource2, action2; etc.), where the "resource" in the pair identifies the resource and the "action" in the pair identifies the action and includes a decision whether the specified action on that resource is allowed for client 106 (e.g., permit/deny).

At 208, authorization server 102 can encrypt and/or store the decision token in caching device 108. For example, these decisions can be in a token format such as JSON Web Token (JWT). Authorization server 102 can sign these tokens using asymmetric keys to make them tamper-proof. Client 106 can verify the signature before applying and extracting the decision from the token.

A JWT can be digitally signed in a variety of ways, such as by using a secret (e.g., the HMAC algorithm) or a public/private key pair (e.g., using RSA or ECDSA). As an example, not intended to be limiting as to the variable contents, a decision JWT in some embodiments may have a format such as the following:

```
 {
              "sub":"s[id],r[id],a[id]",
              "sbv":"123,Intuit.QBO.INVOICE,read",
              "ver":"1.0.0",
              "dec":"p",
              "obl":"location",
              "o[location]":"Mumbai"
              "iss":"<issuer-asset-id>",
              "exp":<hard-expiry>,
              "sft":<soft-expiry>,
 }
```

At 210, on the basis of the first decision for the first resource, access by client 106 can be enabled or blocked as appropriate. In the future, the same access can be enabled or blocked by checking the contents of the token, as described in detail below.

FIG. 3 shows an example cache arrangement 300 according to some embodiments of the disclosure, showing a logical distribution of nodes in network 100. Many clients 106 may be served by the same authorization server 102. Likewise, multiple clients 106 may be served by respective (e.g., local) caching devices 108. By positioning caching devices 108 local to client(s) 106, decisions in decision tokens can be accessed by client 106 quickly. In some embodiments, decisions in decision tokens can be accessed by client 106 without client 106 making a call to authorization server 102, but instead by first checking a local caching device 108 for a token applicable to the client 106 and/or an individual user thereof (e.g., such as User 1 and User 2 as illustrated).

According to the arrangement 300, authorization server 102 can save the JWT token in the product side near or far cache 108. The SDK for the product being managed by the illustrated system can include a cache interface. Clients 106 can plug the cache support by implementing the interface and injecting it at the time of SDK client construction. If the product/client 106 does not have a far cache available to it, then as a fallback, SDK can use inmemory implementation (e.g., fixed size and least-recently used based) of the cache interface. The token may be cached as follows. Client provided subject context may contain some subject identifier as per the client (e.g., Userld and Realmld or Personald). This context data can be used to generate the cache key. For a single key, there can be multiple token values. The SDK can manage this list at the time of modifications and deletion (expired tokens) by using a get operation and then a put operation.

FIG. 4 shows an example sequence 400 occurring when a token is not available in cache according to some embodiments of the disclosure. Sequence 400 can enable pre-fetching of decisions even before the customer actually needs them. The sequence 400 is an example of authorization process 200 for a first instance, with some sub-components and sub-processes depicted in greater detail relative to FIGS. 1 and 2. For example, product 420 is an element providing service 104 (e.g., a portal into which a user can login for a first access or first access of a specific resource), and policy enforcement point 430 is a component of service 104 that allows access to service 104 by users who comply with an access policy. Authorization SDK 440 is a component of service 104 by which service 104 communicates with authorization server 102. Authorization decision service 260, token generator 470, and open policy agent 480 are all components of authorization server 102 as described elsewhere herein, though it will be appreciated that some embodiments may spread these components among multiple physical computing elements. Cache 450 is a cache maintained by caching device 108.

At 401, the user may attempt to access product 420. This is the entry point of a customer to the product 420, such as by a login made at a login page. At 402, policy enforcement point 430 may determine whether the user has access to the product 420 generally (e.g., the login is valid).

At 403, policy enforcement point 430 can send a request to AuthZ SDK 440 for a resource selector, which is a request to determine whether the user has permission to perform a certain action on a certain resource (e.g., access a service selected at the login page). This request may contain a tag (string) known as a resource selector tag. For example, the tag could be "qbse." The tag may include a group of resource and action pairs related to a context of the access by the user. The tag may be configured according to a recipe specifying which elements to query in the cache, the generation and use of which is described in greater detail below.

The authorization server 102 can interpret this tag and match it to a combination of resource and action pairs (e.g., resourceSelectorTag1 -> { (resource1, action1), (resource2, action2), ...}). This mapping may be configurable by the product. The authorization server 102 may create 'n' requests corresponding to all such pairs and execute them in parallel by using the any appropriate framework for request execution. The n requests can be used to generate a decision along with a token called a decision token. These decision tokens are used to figure out the applicability (to identify for which request it can be applied) and also contain the full access decision. In the sequence 400 of FIG. 4, this process occurs as follows.

At 404, AuthZ SDK 440 first checks whether there is an applicable decision token in cache 450. For the purposes of this sequence 400 (i.e., a first instance of user access), it is understood that at 405, the query to cache 450 yields no applicable decision token. Accordingly, at 406, AuthZ SDK 440 can send an authorization request to AuthZ decision service 460. This may return a list of all access decisions in batch response format for all requests prepared based on the resource and action pair for the respective resource selector tag sent in the request and evaluated respectively.

AuthZ decision service 460 can process each request in the batch. At 407, AuthZ decision service 460 can resolve attributes for each request in the batch. At 408, open policy agent 480 can execute an access policy using the resolved attributes for each respective request and, at 409, return respective decisions whether access is authorized or not. At 410, token generator 470 can generate a decision token and, at 411, return the decision token to AuthZ decision service 460. At 412, AuthZ decision service 460 can provide an authorization response with a decision token for each decision that was processed as described above.

At 413, AuthZ SDK 440 can return decisions to the product's policy enforcement point 430 and, at 414, can extract the decision tokens and store them in the cache 450. At 415, policy enforcement point 430 can allow or deny access in response to the initial request, and at 416, product 420 can provide the requisite user experience (e.g., access to the requested service or a message that access is denied).

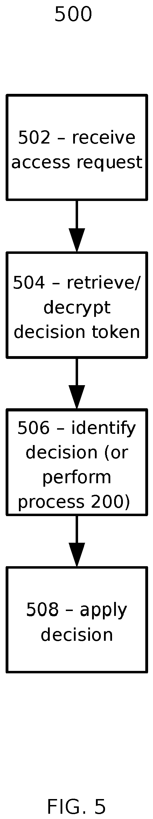

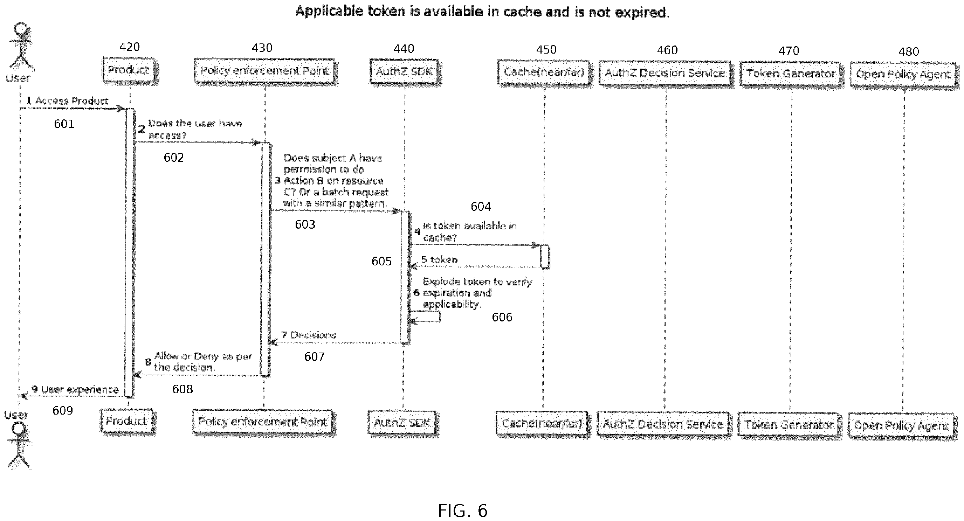

FIG. 5 shows an example authorization process 500 for a subsequent instance according to some embodiments of the disclosure. As discussed above, on the first login to a cloud service of a customer using client 106, there may be no predetermined decision data available. However, on subsequent communications by client 106 after process 200 has been performed, decisions may be available. Process 500 is an example of how the predetermined decision data can be used. Further details about process 500 are also shown in and described with reference to FIG. 6 below.

At 502, authorization server 102 can receive an access request from client 106. The access request may be a general login request or login action. Alternatively or additionally, the access request may be for a particular resource or set of resources available in the cloud environment. The resource(s) may require authorization by authorization server 102 to be accessed. Accordingly, the access request can include information about client 106 that can be evaluated to determine whether the request should be granted (e.g., user ID, credential(s), details about client 106 subscription, location, IP address, etc.).

At 504, client 106 and/or service 104 can retrieve a decision token (e.g., JWT token) indicating a plurality of resource decisions for the client 106, each of the plurality of resource decisions including a decision permitting or forbidding access to at least one resource. For example, as discussed above, the decision token can be encrypted and stored by caching device 108. Client 106 and/or service 104 can obtain the token applicable to client 106 (e.g., a token matching at least a portion of the information about client 106 that is also in the access request) and decrypt the token using a decryption method applicable to the form of encryption used. In some embodiments, the lookup for the decision token can use a cache key, the generation and use of which are described in detail below. In some embodiments, client 106 and/or service 104 can determine that the decision token (and thus any decisions therein) is not expired and/or can verify a signature of the decision token.

At 506, client 106 and/or service 104 can determine whether there is a decision available in the decision token for the resource being requested. For example, the decision tokens can include a set of resource and action pairs (e.g., resource1, action1; resource2, action2; etc.), where the "resource" in the pair identifies the resource and the "action" in the pair identifies the decision whether access to that resource is allowed for client 106 (e.g. yes/no). The resource identified in the request can be compared with the resources in the decision tokens. If the resource identified in the request is found, the action associated with the resource can be taken. If the decision tokens are expired (e.g., as described below), if there are no decision tokens available, or if the decision tokens do not have a decision for the requested resource, client 106 and/or authorization server 102 can perform process 200 to generate a resource token, or authorization server 102 can simply process the request on an ad hoc basis.

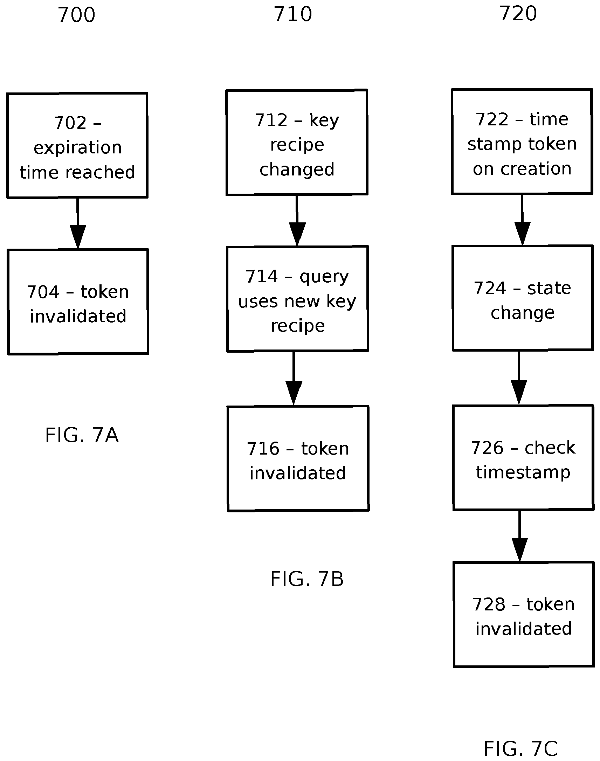

In some embodiments, requesting a decision token can include determining a time to live (TTL) for the token. For example, if the TTL has not yet been reached, the token can be used. Expiration of the token after TTL is described in detail below with respect to FIG. 7A. Some embodiments may provide soft expiration prior to true expiration of TTL. Soft expiration may allow the refresh of decision tokens asynchronously if the token is soft expired. Soft expired means that the token is about to be expired. For example, If soft expiry is 60%, and hard expiry or TTL is 10min, then soft expiration is set to the 6th minute. If the request comes in the soft expiration time range (>=6th and <=10th minute), then the token may be refreshed asynchronously, and TTL may be refreshed, before the actual expiration time. This is a further advantage of decision reuse as it helps token/response to be refreshed in the ongoing call of fetching the decision. It reduces the overhead of calling authorization server 102 in cache miss, as the token can be refreshed in the background with a previous call in a window of soft expiration time, reducing latency and improving the overall system performance.

At 508, client 106 and/or service 104 can apply the decision from the decision token. For example, if "resource1" was requested, the decision in "access1" can be applied, whether the decision is to allow access or deny access.

FIG. 6 shows an example sequence 600 occurring when a token is available in cache according to some embodiments of the disclosure. Sequence 600 can perform pre-fetching of decisions even before the customer actually needs them. The sequence 600 is an example of authorization process 500 for a subsequent instance, with some sub-components and sub-processes depicted in greater detail relative to FIGS. 1 and 5. As in FIG. 4, product 420 is an element providing service 104 (e.g., a portal into which a user can login for a first access or first access of a specific resource), and policy enforcement point 430 is a component of service 104 that allows access to service 104 by users who comply with an access policy. Authorization SDK 440 is a component of service 104 by which service 104 communicates with authorization server 102. Authorization decision service 260, token generator 470, and open policy agent 480 are all components of authorization server 102 as described elsewhere herein, though it will be appreciated that some embodiments may spread these components among multiple physical computing elements. Cache 450 is a cache maintained by caching device 108. In the illustrated example, sequence 600 only requires client access to cache 450, and not the components of authorization server 102.

At 601, the user may attempt to access product 420. This is the entry point of a customer to the product 420, such as by a login made at a login page. At 602, policy enforcement point 430 may determine whether the user has access to the product 420 generally (e.g., the login is valid).

At 603, policy enforcement point 430 can send a request to AuthZ SDK 440 for a resource selector, which is a request to determine whether the user has permission to perform a certain action on a certain resource (e.g., access a service selected at the login page). This request may contain a tag (string) known as a resource selector tag. For example, the tag could be "qbse."

At 604, AuthZ SDK 440 can check cache 450 for a token applicable to the resource and user in the tag. Assuming such a token exists, at 605, cache 450 can return the token to AuthZ SDK 440. At 606, AuthZ SDK 440 can check the token for expiration, signature verification, and/or various other checks to ensure the token is valid and has not been tampered with.

At 607, AuthZ SDK 440 can return decisions to the product's policy enforcement point 430. At 608, policy enforcement point 430 can allow or deny access in response to the request, and at 609, product 420 can provide the requisite user experience (e.g., access to the requested service or a message that access is denied).

FIGS. 7A-7C show example token invalidation processes according to some embodiments of the disclosure. Decision tokens can be invalidated in a variety of ways. FIGS. 7A-7C give three examples. These and/or other methods of invalidating decision tokens can ensure that decisions are up to date and that if user permissions are added or revoked, the available decisions reflect such changes.

A first example invalidation process 700 is shown in FIG. 7A. This is an expiration based process. A decision token may have a TTL setting associated therewith, for example stored in a header or other portion thereof. At 702, a decision token's TTL, indicating an expiration time for the token, may be reached. At 704, the token can be invalidated, for example by being deleted from the cache or otherwise rendered unreachable.

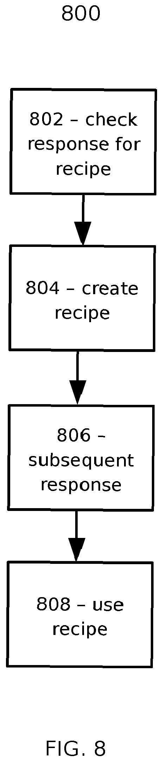

A second example invalidation process 710 is shown in FIG. 7B. As mentioned above, the query to the cache to retrieve the decision token can use a cache key. As described below with respect to FIG. 8, a cache key can be generated using a recipe. Accordingly, to invalidate cache keys, and thereby render inaccessible the decision tokens they would find when used, the recipe may be changed. Essentially, a lookup key used for retrieving decision tokens is changed, thereby causing a mismatch between a subsequent request for access to a resource from the client 106 and the decision token.

At 712, the key recipe may change. For example, authorization server 102 can change the key recipe and notify client 106 of the new key recipe. In some embodiments, client 106 may change the key recipe itself.

Changing the key recipe can cause client 106 to change the format of its queries to caching device 108 when it attempts to retrieve a decision token. Accordingly, at 714, client 106 can request a decision token from caching device 108 using the new recipe. Any old decision tokens created according to a prior key recipe can be rendered unreachable by the new key recipe. As such, at 716, the old decision tokens are rendered invalid by being inaccessible. When such decision tokens' TTLs expire, they can be deleted from the cache.

For example, assume recipe v1 as follows: "sub[id],act[id],res[id]". A cache key constructed according to this recipe can be as follows: "sub[id]=123,act[id]=read,res[id]=intuit.qbo.invoice". If the recipe v2 is updated to "sub[id],res[id]", then the caching key for the same request will become "sub[id]=123,res[id]=intuit.qbo.invoice". As the new caching key no longer contains the action id attribute, old tokens will become unreachable, and the caching device 108 will remove old tokens on their TTL expirations.

A third example invalidation process 720 is shown in FIG. 7C. This invalidation process can be based on state changes, wherein a decision token can be invalidated if the last state change of the subject token is more recent than the creation time of the token. In this scheme, the fact that a generation time of the decision token is later than a state change time can be verified before processing, and the decision token can be discarded upon a time-based expiration or upon a determination that the generation time of the decision token is prior to the state change time.

At 722, during creation of a decision token, the decision token may be provisioned with a creation timestamp, indicating when it was created. At 724, authentication server 103 or some other device may change a state relevant to the decision token and store a state change timestamp indicating when the state was changed in the authentication ticket. For example, if there is any role related modification for the client 106, or any other state change for client 106 or service 104, then this last state changed timestamp can be updated. This update can also happen whenever any PIP (Policy Information Point) informs authentication server 103 that something related to a client 106 or service 104 has changed, and authorization server 103 can inform authentication to expire the previous authentication ticket and create a fresh one with the latest creation timestamp.

ADS can use this last state timestamp from the authentication ticket to find out the eligibility of the decision token. A decision token generated before the last state changed timestamp can be marked as expired. For example, at 726, in the event of a request for token reuse, authentication server 103 and/or client 106 can compare the creation time of the token with the last state changed attribute available in memory. If the creation time is older, then it would mean the decision token was created before the latest state change happened, making this token obsolete. Hence, at 728, the decision token can be removed from the cache or otherwise be rendered inaccessible to client 106. While not shown in FIG. 7C, it can be appreciated that if the creation time of the token is more recent than the state change, no invalidation is necessary, and the token can be processed as described above to obtain a decision.

FIG. 8 shows an example cache key generation process 800 according to some embodiments of the disclosure. As noted above, some embodiments may facilitate lookup of tokens through the use of caching keys. Caching keys may be generated according to recipes. Authorization server 102 can keep a caching key recipe corresponding to each resourceld. This recipe contains the formula for making the caching key. Client 106 can store this recipe in volatile memory, so at startup time it will be empty.

At 802, client 106 (or authorization server 102 or other devices, in other embodiments) can intercept all the responses that are passing through AuthSDK to see if they contain any decision tokens. If a response contains a decision token, client 106 can look at applicable attributes of the token. For example, applicable attributes may have a form such as the following: "sub[id]=123,act[id]=create,res[id]=intuit.qbo.invoice".

At 804, if there is no recipe available for the resourceld (res[id]), then client 106 AuthSDK can generate the recipe by parsing the applicable attributes. For example, the recipe corresponding to the previous example will be "sub[id],act[id],res[id]". This can be stored locally.

At 806, a subsequent response can be intercepted. Client 106 AuthSDK may compare if the stored recipe is still the same as the new one that it got from the token. Assuming the recipes are the same, at 808, client 106 AuthSDK can create the caching key for both lookup and storage by using the recipe available for that resource.

In some embodiments, the product may be able to prepend any data to such keys by providing an interface to plug a post-processor. This can allow optimizations for caching management if the underlying caching mechanism supports hierarchical caching keys. The policy can manage recipes as they are derived from the applicable attributes. The policy may have declared applicable attributes for generation of decision tokens.

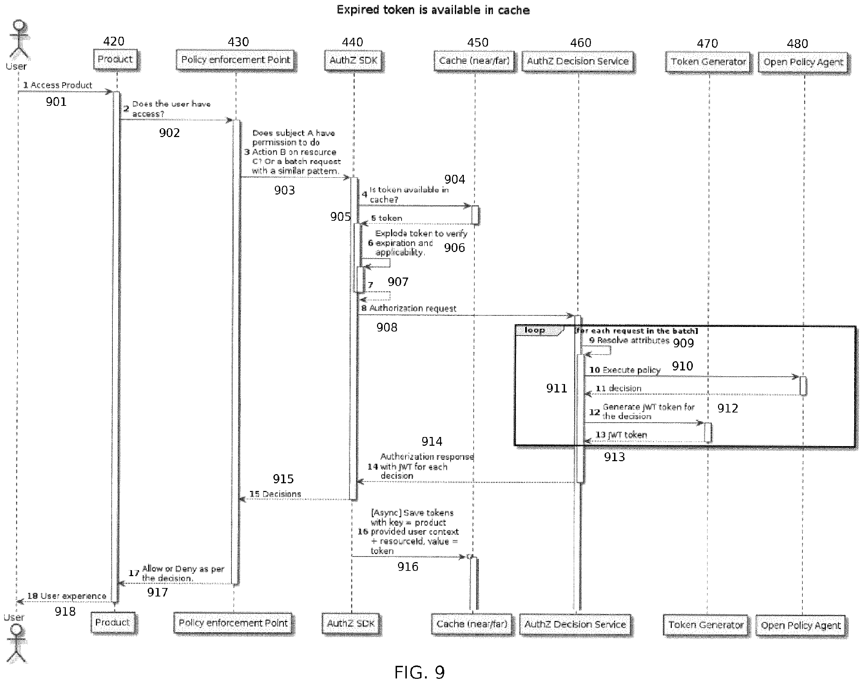

FIG. 9 shows an example sequence 900 occurring when an expired token is available in cache according to some embodiments of the disclosure. Sequence 900 can enable pre-fetching of decisions even before the customer actually needs them. The sequence 900 is an example of authorization process 500 for a subsequent instance, with some sub-components and sub-processes depicted in greater detail relative to FIGS. 1 and 5. Unlike sequence 600 of FIG. 6, this sequence 900 is relevant when the subject decision token is expired as described above. As in FIG. 4, product 420 is an element providing service 104 (e.g., a portal into which a user can login for a first access or first access of a specific resource), and policy enforcement point 430 is a component of service 104 that allows access to service 104 by users who comply with an access policy. Authorization SDK 440 is a component of service 104 by which service 104 communicates with authorization server 102. Authorization decision service 260, token generator 470, and open policy agent 480 are all components of authorization server 102 as described elsewhere herein, though it will be appreciated that some embodiments may spread these components among multiple physical computing elements. Cache 450 is a cache maintained by caching device 108. In the illustrated example, sequence 900 only requires client access to cache 450, and not the components of authorization server 102.

At 901, the user may attempt to access product 420. This is the entry point of a customer to the product 420, such as by a login made at a login page. At 902, policy enforcement point 430 may determine whether the user has access to the product 420 generally (e.g., the login is valid).

At 903, policy enforcement point 430 can send a request to AuthZ SDK 440 for a resource selector, which is a request to determine whether the user has permission to perform a certain action on a certain resource (e.g., access a service selected at the login page). This request may contain a tag (string) known as a resource selector tag. For example, the tag could be "qbse."

At 904, AuthZ SDK 440 can check cache 450 for a token applicable to the resource and user in the tag. Assuming such a token exists, at 905, cache 450 can return the token to AuthZ SDK 440. At 906, AuthZ SDK 440 can check the token for expiration, signature verification, and/or various other checks to ensure the token is valid and has not been tampered with. Assuming such a token is expired, at 907, AuthZ SDK 440 can determine that the token is expired. Accordingly, at 908, AuthZ SDK 440 can send an authorization request to AuthZ decision service 460. This may be a batch request for multiple services.

AuthZ decision service 460 can process each request in the batch. At 909, AuthZ decision service 460 can resolve attributes for each request in the batch. At 910, open policy agent 480 can execute an access policy using the resolved attributes for each respective request and, at 911, return respective decisions whether access is authorized or not. At 912, token generator 470 can generate a decision token and, at 913, return the decision token to AuthZ decision service 460. At 914, AuthZ decision service 460 can provide an authorization response with a decision token for each decision that was processed as described above.

At 915, AuthZ SDK 440 can return decisions to the product's policy enforcement point 430 and, at 916, can extract the decision tokens and store them in the cache 450. At 917, policy enforcement point 430 can allow or deny access in response to the initial request, and at 918, product 420 can provide the requisite user experience (e.g., access to the requested service or a message that access is denied).

FIG. 10 shows a computing device 1000 according to some embodiments of the disclosure. For example, computing device 1000 may function as authorization server 102, service 104, client 106, and/or caching device 108, and/or any portion(s) thereof, or multiple computing devices 1000 may function as any of authorization server 102, service 104, client 106, and/or caching device 108

Computing device 1000 may be implemented on any electronic device that runs software applications derived from compiled instructions, including without limitation personal computers, servers, smart phones, media players, electronic tablets, game consoles, email devices, etc. In some implementations, computing device 1000 may include one or more processors 1002, one or more input devices 1004, one or more display devices 1006, one or more network interfaces 1008, and one or more computer-readable mediums 1010. Each of these components may be coupled by bus 1012, and in some embodiments, these components may be distributed among multiple physical locations and coupled by a network.

Display device 1006 may be any known display technology, including but not limited to display devices using Liquid Crystal Display (LCD) or Light Emitting Diode (LED) technology. Processor(s) 1002 may use any known processor technology, including but not limited to graphics processors and multi-core processors. Input device 1004 may be any known input device technology, including but not limited to a keyboard (including a virtual keyboard), mouse, track ball, and touch-sensitive pad or display. Bus 1012 may be any known internal or external bus technology, including but not limited to ISA, EISA, PCI, PCI Express, NuBus, USB, Serial ATA or FireWire. In some embodiments, some or all devices shown as coupled by bus 1012 may not be coupled to one another by a physical bus, but by a network connection, for example. Computer-readable medium 1010 may be any medium that participates in providing instructions to processor(s) 1002 for execution, including without limitation, non-volatile storage media (e.g., optical disks, magnetic disks, flash drives, etc.), or volatile media (e.g., SDRAM, ROM, etc.).

A computer readable medium may include non-transitory type media such as physical storage media including storage discs and solid state devices. A computer readable medium may also or alternatively include transient media such as carrier signals, carrier waves and transmission media. A computer-readable storage medium is defined herein as a non-transitory memory device. A memory device includes memory space within a single physical storage device or memory space spread across multiple physical storage devices.

Computer-readable medium 1010 may include various instructions 1014 for implementing an operating system (e.g., Mac OS^{®}, Windows^{®}, Linux). The operating system may be multi-user, multiprocessing, multitasking, multithreading, real-time, and the like. The operating system may perform basic tasks, including but not limited to: recognizing input from input device 1004; sending output to display device 1006; keeping track of files and directories on computer-readable medium 1010; controlling peripheral devices (e.g., disk drives, printers, etc.) which can be controlled directly or through an I/O controller; and managing traffic on bus 1012. Network communications instructions 1016 may establish and maintain network connections (e.g., software for implementing communication protocols, such as TCP/IP, HTTP, Ethernet, telephony, etc.).

Server processing 1018 may include the system elements and/or the instructions that enable computing device 1000 to perform the processing of authorization server 102 and/or service 104 as described above. Client processing 1020 may include the system elements and/or the instructions that enable computing device 1000 to perform the processing of client 106 as described above. Cache processing 1022 may include the system elements and/or the instructions that enable computing device 1000 to perform the processing of caching device 108 as described above. Application(s) 1024 may be an application that uses or implements the outcome of processes described herein and/or other processes. In some embodiments, the various processes may also be implemented in operating system 1014.

The described features may be implemented in one or more computer programs that may be executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program may be written in any form of programming language (e.g., Objective-C, Java), including compiled or interpreted languages, and it may be deployed in any form, including as a stand-alone program or as a module, component, subroutine, or other unit suitable for use in a computing environment.

Suitable processors for the execution of a program of instructions may include, by way of example, both general and special purpose microprocessors, and the sole processor or one of multiple processors or cores, of any kind of computer. Generally, a processor may receive instructions and data from a read-only memory or a random access memory or both. Elements of a computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data may include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

To provide for interaction with a user, the features may be implemented on a computer having a display device such as an LED or LCD monitor for displaying information to the user and a keyboard and a pointing device such as a mouse or a trackball by which the user can provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination thereof. The components of the system may be connected by any form or medium of digital data communication such as a communication network. Examples of communication networks include, e.g., a telephone network, a LAN, a WAN, and the computers and networks forming the Internet.

The computer system may include clients and servers. A client and server may generally be remote from each other and may typically interact through a network. The relationship of client and server may arise by virtue of computer programs running on the respective computers and having a client-server relationship to each other.

One or more features or steps of the disclosed embodiments may be implemented using an API and/or SDK, in addition to those functions specifically described above as being implemented using an API and/or SDK. An API may define one or more parameters that are passed between a calling application and other software code (e.g., an operating system, library routine, function) that provides a service, that provides data, or that performs an operation or a computation. SDKs can include APIs (or multiple APIs), integrated development environments (IDEs), documentation, libraries, code samples, and other utilities.

The API and/or SDK may be implemented as one or more calls in program code that send or receive one or more parameters through a parameter list or other structure based on a call convention defined in an API and/or SDK specification document. A parameter may be a constant, a key, a data structure, an object, an object class, a variable, a data type, a pointer, an array, a list, or another call. API and/or SDK calls and parameters may be implemented in any programming language. The programming language may define the vocabulary and calling convention that a programmer will employ to access functions supporting the API and/or SDK.

In some implementations, an API and/or SDK call may report to an application the capabilities of a device running the application, such as input capability, output capability, processing capability, power capability, communications capability, etc.

While various embodiments have been described above, it should be understood that they have been presented by way of example and not limitation. It will be apparent to persons skilled in the relevant art(s) that various changes in form and detail can be made therein without departing from the scope. In fact, after reading the above description, it will be apparent to one skilled in the relevant art(s) how to implement alternative embodiments. Additionally or alternatively, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

Finally, it is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

The invention is defined in the appended claims.

Thus, from one perspective, there has now been described a processor that may receive a request for access to a first resource from a client. The processor may retrieve a decision token indicating a plurality of resource decisions for the client, each of the plurality of resource decisions including a decision permitting or forbidding access to at least one resource. The processor may identify, among the plurality of resource decisions, a first decision for the first resource. On the basis of the first decision for the first resource, the processor may enable or block access to the first resource by the client. The decision token may have been generated by the processor generating a plurality of resource decisions for the client, the plurality of resource decisions including a first decision permitting or forbidding access to the first resource and at least one additional decision permitting or forbidding access to at least one additional resource.

Further examples of feature combinations taught by the present disclosure are set out in the following numbered clauses:
1. A method comprising:
   receiving, by a processor, a request for access to a first resource from a client;
   in response to receiving the request, retrieving, by the processor, a decision token indicating a plurality of resource decisions for the client, each of the plurality of resource decisions including a decision permitting or forbidding access to at least one resource;
   identifying, among the plurality of resource decisions, a first decision for the first resource; and
   on the basis of the first decision for the first resource, enabling or blocking, by the processor, access to the first resource by the client.
2. The method of clause 1, further comprising decrypting, by the processor, the decision token, wherein the identifying comprises reading the decision token that has been decrypted.
3. The method of clause 1 or 2, wherein the identifying comprises determining that the first decision is not expired.
4. The method of any of clauses 1 to 3, further comprising verifying, by the processor, a signature of the decision token.
5. The method of any of clauses 1 to 4, further comprising changing, by the processor, a lookup key used by the processor for the retrieving, thereby causing a mismatch between a subsequent request for access to the first resource from the client and the decision token.
6. The method of any of clauses 1 to 5, wherein the retrieving comprises verifying, by the processor, that a generation time of the decision token is later than a state change time.
7. The method of any of clauses 1 to 5, further comprising discarding, by the processor, the decision token upon a time-based expiration or a determination that a generation time of the decision token is prior to a state change time.
8. A method comprising:
   receiving, by a processor, a request for access to a first resource from a client;
   generating, by the processor, a plurality of resource decisions for the client, the plurality of resource decisions including a first decision permitting or forbidding access to the first resource and at least one additional decision permitting or forbidding access to at least one additional resource;
   storing, by the processor, a decision token indicating the plurality of resource decisions; and
   on the basis of the first decision for the first resource, enabling or blocking, by the processor, access to the first resource by the client.
9. The method of clause 8, wherein the generating comprises:
   determining, by the processor, client information; and
   for each of the first resource and the at least one additional resource, processing, by the processor, the client information against an access policy to determine whether the client is eligible for access.
10. The method of clause 8 or 9, wherein the storing comprises encrypting the decision token.
11. The method of any of clauses 8 to 10, further comprising:
   receiving, by the processor, a second request for access to at least one of the first resource and the at least one additional resource from the client;
   in response to receiving the second request, retrieving, by the processor, the decision token;
   identifying, by the processor, among the plurality of resource decisions, the decision for the at least one of the first resource and the at least one additional resource; and
   on the basis of the decision for the at least one of the first resource and the at least one additional resource, enabling or blocking, by the processor, access to the at least one of the first resource and the at least one additional resource by the client.
12. The method of any of clauses 8 to 11, further comprising changing, by the processor, a lookup key used by the processor for the retrieving, thereby causing a mismatch between a subsequent request for access to the first resource from the client and the decision token.
13. The method of any of clauses 8 to 12, further comprising discarding, by the processor, the decision token upon a time-based expiration or a determination that a generation time of the decision token is prior to a state change time.
14. A system comprising:
   a processor; and
   a memory in communication with the processor storing instructions that, when executed by the processor, cause the processor to perform processing comprising:
      on receipt of a first request for access to a first resource from a client:
         generating a plurality of resource decisions for the client, the plurality of resource decisions including a first decision permitting or forbidding access to the first resource and at least one additional decision permitting or forbidding access to at least one additional resource,
         storing a decision token indicating the plurality of resource decisions, and
         on the basis of the first decision for the first resource, enabling or blocking access to the first resource by the client; and
      on receipt of a second request for access to at least one of the first resource and the at least one additional resource from the client:
         retrieving the decision token,
         identifying, among the plurality of resource decisions, the decision for the at least one of the first resource and the at least one additional resource, and
         on the basis of the decision for the at least one of the first resource and the at least one additional resource, enabling or blocking access to the at least one of the first resource and the at least one additional resource by the client.
15. The system of clause 14, wherein the generating comprises:
   determining client information; and
   for each of the first resource and the at least one additional resource, processing the client information against an access policy to determine whether the client is eligible for access.
16. The system of clause 14 or 15, wherein the storing comprises encrypting the decision token.
17. The system of any of clauses 14 to 16, wherein the processing further comprises changing a lookup key used by the processor for the retrieving, thereby causing a mismatch between a subsequent request for access to the first resource from the client and the decision token.
18. The system of any of clauses 14 to 17, wherein the processing further comprises discarding the decision token upon a time-based expiration or a determination that a generation time of the decision token is prior to a state change time.
19. The system of any of clauses 14 to 18, wherein the identifying comprises determining that the first decision is not expired.
20. The system of any of clauses 14 to 19, wherein the processing further comprises verifying a signature of the decision token.

## Claims

1. A method comprising:
receiving, by a processor, a request for access to a first resource from a client;
in response to receiving the request, retrieving, by the processor, a decision token indicating a plurality of resource decisions for the client, each of the plurality of resource decisions including a decision permitting or forbidding access to at least one resource;
identifying, among the plurality of resource decisions, a first decision for the first resource; and
on the basis of the first decision for the first resource, enabling or blocking, by the processor, access to the first resource by the client.

2. The method of claim 1, further comprising decrypting, by the processor, the decision token, wherein the identifying comprises reading the decision token that has been decrypted.

3. The method of claim 1 or 2, wherein the identifying comprises determining that the first decision is not expired.

4. The method of any of claims 1 to 3, further comprising verifying, by the processor, a signature of the decision token.

5. The method of any of claims 1 to 4, further comprising changing, by the processor, a lookup key used by the processor for the retrieving, thereby causing a mismatch between a subsequent request for access to the first resource from the client and the decision token.

6. The method of any of claims 1 to 5, wherein the retrieving comprises verifying, by the processor, that a generation time of the decision token is later than a state change time.

7. The method of any of claims 1 to 5, further comprising discarding, by the processor, the decision token upon a time-based expiration or a determination that a generation time of the decision token is prior to a state change time.

8. A method comprising:
receiving, by a processor, a request for access to a first resource from a client;
generating, by the processor, a plurality of resource decisions for the client, the plurality of resource decisions including a first decision permitting or forbidding access to the first resource and at least one additional decision permitting or forbidding access to at least one additional resource;
storing, by the processor, a decision token indicating the plurality of resource decisions; and
on the basis of the first decision for the first resource, enabling or blocking, by the processor, access to the first resource by the client.

9. The method of claim 8, wherein the generating comprises:
determining, by the processor, client information; and
for each of the first resource and the at least one additional resource, processing, by the processor, the client information against an access policy to determine whether the client is eligible for access.

10. The method of claim 8 or 9, wherein the storing comprises encrypting the decision token.

11. The method of any of claims 8 to 10, further comprising:
receiving, by the processor, a second request for access to at least one of the first resource and the at least one additional resource from the client;
in response to receiving the second request, retrieving, by the processor, the decision token;
identifying, by the processor, among the plurality of resource decisions, the decision for the at least one of the first resource and the at least one additional resource; and
on the basis of the decision for the at least one of the first resource and the at least one additional resource, enabling or blocking, by the processor, access to the at least one of the first resource and the at least one additional resource by the client.

12. The method of any of claims 8 to 11, further comprising changing, by the processor, a lookup key used by the processor for the retrieving, thereby causing a mismatch between a subsequent request for access to the first resource from the client and the decision token.

13. The method of any of claims 8 to 12, further comprising discarding, by the processor, the decision token upon a time-based expiration or a determination that a generation time of the decision token is prior to a state change time.

14. A system comprising:
a processor; and
a memory in communication with the processor storing instructions that, when executed by the processor, cause the processor to perform the method of any of claims 1 to 13.
